# EUROPÄISCHE PATENTSCHRIFT

(11) **EP 3 836 775 B1**
(45) Veröffentlichungstag und Bekanntmachung des Hinweises auf die Patenterteilung: **25.05.2022**
(21) Anmeldenummer: 19752154.5
(22) Anmeldetag: 05.08.2019
(51) Int. Cl.: A01C 15/00, A01C 7/12

(54) **DOSIEREINRICHTUNG FÜR KÖRNIGES GUT**
METERING UNIT FOR GRANULAR MATERIAL
DISPOSITIF DE DOSAGE POUR MATÉRIAU GRANULAIRE

(30) Priorität: 17.08.2018 DE 102018120067
(43) Veröffentlichungstag der Anmeldung: 23.06.2021
(73) Patentinhaber: Amazonen-Werke H. Dreyer SE & Co. KG, 49205 Hasbergen (DE)
(72) Erfinder: RADEKE, Jan Philipp, 27211 Bassum (DE)
(86) Internationale Anmeldenummer: PCT/EP2019/070969
(87) Internationale Veröffentlichungsnummer: WO 2020/035338

(56) Entgegenhaltungen:
- EP-A1- 2 832 202
- EP-A1- 2 862 431
- EP-A1- 3 053 427
- DE-U1-202014 009 404
- US-A1- 2012 174 844

## Beschreibung

Die Erfindung betrifft eine Dosiereinrichtung für körniges Gut gemäß dem Oberbegriff des Patentanspruches 1 und wie bekannt aus US 2012/174844 A1, ein Verfahren zum Öffnen einer Dosiereinrichtung gemäß dem Oberbegriff des Patentanspruches 5 und eine landwirtschaftliche Verteilmaschine gemäß dem Oberbegriff des Patentanspruches 8.

Aus der Druckschrift EP 2 832 202 B1 ist eine Verteilmaschine zum Ausbringen von Saatgut, Dünger oder dergleichen bekannt. Diese Verteilmaschine umfasst einen Vorratsbehälter mit einer Mehrzahl von Dosiereinrichtungen für körniges Gut, wobei eine Dosiereinrichtung zur Förderung des körnigen Gutes in einstellbaren Mengen eingerichtet ist. Hierzu umfasst die jeweilige Dosiereinrichtung ein Dosiergehäuse. In dem Dosiergehäuse ist ein drehbar gelagertes Dosierrad angeordnet. Im Betrieb wird das Dosierrad von einem Antrieb in Rotation versetzt, so dass körniges Gut mittels des Dosierrades gefördert wird. Außerdem umfasst die Dosiereinrichtung einen in verschiedene Positionen verschiebbaren Absperrschieber. Der Absperrschieber lässt sich so in verschiedene Positionen verschieben und gibt so einen gewünschten Öffnungsquerschnitt frei, durch welchen körniges Gut in das Dosiergehäuse einfließen kann. Folglich ist der Absperrschieber für den Betrieb zu öffnen, damit stetig körniges Gut nachfließen kann. Außerhalb des Betriebes ist der Absperrschieber soweit zu verschieben, dass der Öffnungsquerschnitt geschlossen ist, um ungewünschtes Austreten des körnigen Gutes aus dem Vorratsbehälter zu dem Dosierrad zu verhindern. Zur regelmäßigen Wartung oder Anpassung der Dosiereinrichtung kann es für einen Benutzer notwendig sein Arbeiten am Inneren des Dosiergehäuses durchzuführen. So ist beispielsweise denkbar, dass der Benutzer das Dosiergehäuse säubern oder das Dosierrad austauschen möchte. Nachteilig bei dieser Dosiereinrichtung ist, dass das Innere des Dosiergehäuses dem Benutzer nahezu frei zugänglich ist. Besonders negativ ist hierbei, dass für den Benutzer die Gefahr besteht mit einem angetriebenen Dosierrad in Kontakt zu kommen und sich an diesem bei Arbeiten an der Dosiereinrichtung zu verletzen.

Die der Erfindung zugrundeliegende Aufgabe besteht somit darin, eine Dosiereinrichtung für landwirtschaftliche Verteilmaschinen mit verbesserter Sicherheit bei der Handhabung zu schaffen.

Diese Aufgabe wird erfindungsgemäß dadurch gelöst, dass das Dosiergehäuse eine in verschiedene Stellungen verbringbare Dosierabdeckung umfasst, dass die Dosierabdeckung eine erste das Dosierrad schützenden Stellung und eine zweite das Dosierrad freigebende Stellung umfasst und an der dem Absperrschieber zugewandten Seite eine Nase umfasst, dass der Dosierabdeckung eine die Dosierabdeckung in der ersten Stellung sichernde Verriegelung zugeordnet ist, dass die Verriegelung ein wegdrückbares Verriegelungselement umfasst, welches dazu eingerichtet ist, eine lösbare, formschlüssige Verbindung mit der Nase der Dosierabdeckung in der ersten Stellung herzustellen, dass der Absperrschieber in Wegdrückrichtung des Verriegelungselementes hinter der Verriegelung angeordnet ist und eine Aufnahme für das Verriegelungselement aufweist, dass der Absperrschieber mittels der Aufnahme dazu eingerichtet ist, das Wegdrücken des Verriegelungselementes zu ermöglichen und/oder zu blockieren.

Infolge dieser Maßnahme ist die Dosiereinrichtung mit zwei in Reihe geschalteten Sicherheitsstufen geschaffen, so dass der Schutz für den Benutzer bei der Handhabung in vortrefflicher Weise gesteigert ist. Die erste Sicherheitsstufe ist durch die Verriegelung gebildet, ohne dessen Betätigung das Innere des Dosiergehäuses dem Benutzer nicht zugänglich ist. Diese Verriegelung ist zusätzlich durch die Stellung des Absperrschiebers abgesichert, welcher die zweite Sicherheitsstufe bildet.

Der Absperrschieber ist mit seiner Aufnahme für das Verriegelungselement derart hinter der Verriegelung angeordnet, dass das Verriegelungselement, insbesondere durch Wegdrücken, in die Aufnahme verschiebbar ist. Die Aufnahme am Absperrschieber ist hierbei so angeordnet, dass das Verriegelungselement nur in die Aufnahme verschiebbar ist, wenn der Absperrschieber sich in seiner geschlossenen Stellung befindet. Sobald der Absperrschieber in eine zumindest teilweise geöffnete Stellung verschoben ist, fluchtet die Aufnahme nicht mehr mit dem Verriegelungselement, so dass die Verschiebbarkeit des Verriegelungselementes blockiert ist. Im Betrieb der Dosiereinrichtung ist das Innere des Dosiergehäuses dem Benutzer so nicht mehr zugänglich, da die Betätigung der Verriegelung schon durch die geöffnete Stellung des Absperrschiebers verhindert wird und die Dosierabdeckung somit in ihrer ersten das Dosierrad schützenden Stellung gesichert ist.

Um das Dosiergehäuse zu öffnen, ist der Absperrschieber folglich in die geschlossene Stellung zu verschieben, so dass die Verschiebbarkeit des Verriegelungselementes ermöglicht ist. Die Dosiereinrichtung ist typischerweise bei geschlossenem Absperrschieber nicht in Betrieb, so dass es für den Benutzer sicher ist, die Dosierabdeckung zu öffnen ohne mit dem angetriebenen Dosierrad in Kontakt zu kommen.

In einer vorteilhaften Weiterbildung der Erfindung ist vorgesehen, dass die Dosierabdeckung mittels eines eine Schwenkachse aufweisenden Schwenkgelenkes an dem Dosiergehäuse angeordnet ist, dass die Dosierabdeckung mittels des Schwengelenks zwischen der ersten und zweiten Stellung verbringbar ist. Vorteilhaft ist hierbei, dass die Dosierabdeckung nicht verlierbar am Dosiergehäuse angeordnet ist. Das heißt, auch bei Arbeiten am Inneren des Dosiergehäuses ist die Dosierabdeckung am Dosiergehäuse befestigt und muss nicht mit besonderer Sorgfalt aufbewahrt werden oder kann durch Herunterfallen beschädigt werden.

Die erfindungsgemäße Dosiereinrichtung ist außerdem vorteilhaft dadurch weitergebildet, dass die Dosiereinrichtung Mittel zum Aufbringen einer Wegdrückkraft auf das Verriegelungselement umfasst. Die Bedienung der Verriegelung ist damit erleichtert, so dass die Dosierabdeckung in einfacher Weise zwischen ihren Stellungen verbringbar ist.

In einer vorteilhaften Ausführungsform der Erfindung umfassen die Mittel zum Aufbringen der Wegdrückkraft ein Werkzeug und eine zu dem Werkzeug korrespondierende Einführhilfe an der Dosierabdeckung, wobei die Einführhilfe derart an der Dosierabdeckung angeordnet ist, dass das unmittelbar manuelle Aufbringen der Wegdrückkraft verhindert und das Aufbringen mittels des Werkzeuges erleichtert ist. Die Dosiereinrichtung ist somit mit einer weiteren Sicherheitsstufe geschaffen. Die Einführhilfe ist vorzugsweise direkt vor dem Verriegelungselement angeordnet, so dass das Verriegelungselement von der Einführhilfe zumindest teilweise verdeckt ist. Für den Benutzer ist das Verriegelungselement so nicht mit den Fingern erreichbar, so dass die Verriegelung nicht unmittelbar von Hand betätigbar ist. Die Einführhilfe ist so geformt, dass sie eine Führungsbahn für das Werkzeug in Wegdrückrichtung des Verriegelungselementes bildet. Das Werkzeug kann ein Universalwerkzeug sein, was für verschiedene weitere Funktionen der Dosiereinrichtung oder einer Verteilmaschine vorgesehen ist. Das Werkzeug weist vorzugsweise an seinem hinteren Ende einen Griff auf und ist an seinem vorderen Ende stabförmig ausgeführt.

In einer weiteren vorteilhaften Weiterbildung der Erfindung ist vorgesehen, dass die Dosiereinrichtung zur drehbaren Lagerung des Dosierrades ein entnehmbares Lagergehäuse umfasst, dass das Dosiergehäuse eine Aufnahme aufweist, in die das Lagergehäuse einsetzbar ist, dass die Aufnahme eine, vorzugsweise fingerförmige, Hinterschnitt bildende, Ausformung aufweist, dass das Lagergehäuse eine, vorzugsweise nutartige, Ausnehmung aufweist, dass die Ausnehmung dazu eingerichtet ist, die Ausformung zu hintergreifen und das Lagergehäuse so mittels der Ausnehmung und der korrespondierenden Ausformung lösbar an dem Dosiergehäuse festlegbar ist. Vorteilhaft ist hierbei, dass die Dosiereinrichtung mit einer besonders leicht zugänglichen Lagerung geschaffen ist. In besonders einfacher Weise können Mittel zur Lagerung des Dosierrades in dem Lagergehäuse vormontiert werden und anschließend kann das intakte Lagergehäuse in das Dosiergehäuse eingesetzt werden. Das Lagergehäuse ist somit zur drehbaren Lagerung des Dosierrades eingerichtet und lässt sich zur Instandhaltung in einfacher Weise entnehmen.

Weiter vorteilhaft ist, dass das Lagergehäuse werkzeuglos an dem Dosiergehäuse festlegbar ist. Die Ausformung an der Aufnahme des Dosiergehäuses und die Ausnehmung des Lagergehäuses bilden eine lösbare, formschlüssige Verbindung nach dem Prinzip eines Bajonettverschlusses. Das Lagergehäuse kann von Hand in die Aufnahme eingesetzt und dann so gedreht werden, dass die Ausnehmung die Ausformung hintergreift. Das Lagergehäuse ist so jederzeit einfach und sicher von Hand festlegbar.

Die erfindungsgemäße Dosiereinrichtung ist ferner vorteilhaft dadurch weitergebildet, dass das Lagergehäuse eine Sicherungsstellung, in der das Lagergehäuse in axialer Richtung am Dosiergehäuse festgelegt ist, und eine Entsicherungsstellung, in der das Lagergehäuse aus dem Dosiergehäuse entnehmbar ist, umfasst, wobei die Dosierabdeckung einen stegförmigen, vorzugsweise ansatzförmig ausgebildeten, Absatz aufweist und der Absatz in der ersten Stellung der Dosierabdeckung eine Anlage für das Lagergehäuse bildet und so dazu eingerichtet ist, eine Drehbewegung des Lagergehäuses aus der Sicherungsstellung in die Entsicherungsstellung zu blockieren.

Infolge dieser Maßnahme ist die Dosiereinrichtung mit einer besonders leicht zugänglichen Lagerung geschaffen. An dem Lagergehäuse im Betrieb auftretende Differenzdrehmomente werden in einfacher Weise von dem Lagergehäuse aufgenommen und an die Dosierabdeckung abgeleitet. Diese Weiterbildung der erfindungsgemäßen Dosiereinrichtung zeichnet sich folglich durch einen besonders einfachen und sicheren Aufbau aus.

In einer weiteren vorteilhaften Weiterbildung der Erfindung weist das Dosiergehäuse einen ersten Anschlag zur Begrenzung der Drehbewegung des Lagergehäuses aus der Entsicherungsstellung in die Sicherungsstellung auf, wobei der Absatz in der ersten Stellung der Dosierabdeckung einen, dem ersten Anschlag vorzugsweise gegenüberliegenden, zweiten Anschlag bildet und das Lagergehäuse zwischen dem ersten und dem zweiten Anschlag drehfest am Dosiergehäuse festlegbar ist. Das Lagergehäuse ist somit nicht nur in axialer Richtung am Dosiergehäuse festgelegt, sondern wird auch zwischen dem ersten Anschlag und dem zweiten Anschlag in der für den Betrieb sicheren Sicherungsstellung gehalten. In vorteilhafter Weise dient der erste Anschlag hierbei zur Begrenzung der Montagebewegung des Lagergehäuses.

Das Lagergehäuse kann als Mittel zur Lagerung des Dosierrades zumindest eine Lagerschale aufweisen, in welche zumindest ein Radiallager einsetzbar ist. Weiter kann das Lagergehäuse zur Lagerung einer Dosierwelle eingerichtet sein. Das Lagergehäuse kann dazu eingerichtet sein, einen Motor aufzunehmen, wobei der Motor zum Antrieb des Dosierrades eingerichtet ist.

In einer weiteren vorteilhaften Weiterbildung der Erfindung ist vorgesehen, dass das Lagergehäuse einen zumindest nahezu runden Querschnitt aufweist, dass die Ausnehmung zumindest annährend viertelkreisförmig an dem Lagergehäuse ausgeformt ist, dass die Aufnahme für das Lagergehäuse halbkreisförmig ausgeführt ist, dass die Ausformung zumindest achtelkreisförmig an der Aufnahme des Dosiergehäuses angeformt ist. Besonders vorteilhaft bei dieser Weiterbildung ist, dass das Lagergehäuse vortrefflich einfach im Dosiergehäuse festlegbar ist. Der runde Querschnitt des Lagergehäuses und kreisabschnittförmige Ausbildung von Aufnahme, Ausnehmung und Ausformung beugen einem Verkanten des Lagergehäuses beim Festlegen im Dosiergehäuse vor.

Die erfindungsgemäße Dosiereinrichtung ist ferner vorteilhaft dadurch weitergebildet, dass die Ausnehmung von der Mittelachse des Lagergehäuses in dem am Dosiergehäuse festgelegten Zustand des Lagergehäuses radial in Richtung Boden weist. Das Lagergehäuse ist so in seinem festgelegten Zustand mit einer Selbsthemmung gegen Herauswandern aus dem festgelegten Zustand geschaffen. Anderenfalls könnte durch Rotationen im Betrieb der Dosiereinrichtung das Lagergehäuse zu einer Drehbewegung angeregt werden, welche die sichere Festlegung am Dosiergehäuse aufheben könnte. Einem solchen Sicherheitsmangel ist in dieser Weiterbildung in zweckmäßiger Weise vorgebeugt.

Die der Erfindung zugrundeliegende Aufgabe wird ferner durch ein Verfahren der eingangs genannten Art gelöst, wobei das erfindungsgemäße Verfahren das Schließen eines Absperrschiebers, das Aufbringen einer Wegdrückkraft auf ein Verriegelungselement, das Eindrücken des Verriegelungselementes zum Lösen einer formschlüssigen Verbindung zwischen Verriegelungselement und einer Nase einer Dosierabdeckung, und das Verbringen der Dosierabdeckung umfasst.

In einer vorteilhaften Weiterbildung des erfindungsgemäßen Verfahrens wird die Wegdrückkraft auf das Verriegelungselement aufgebracht durch das Einführen eines Werkzeuges in eine Einführhilfe an der Dosierabdeckung und das Schieben des Werkzeuges in Richtung des Verriegelungselementes.

Das erfindungsgemäße Verfahren wird ferner dadurch vorteilhaft weitergebildet, dass das Verbringen der Dosierabdeckung das Herausschwenken der Nase an der Dosierabdeckung aus der formschlüssigen Verbindung mit dem Verriegelungselement um eine Schwenkachse und das Herabschwenken der Dosierabdeckung um die Schwenkachse in eine ein Dosierrad der Dosiereinrichtung freigebende Stellung umfasst.

Die der Erfindung zugrundeliegende Aufgabe wird außerdem durch eine landwirtschaftliche Verteilmaschine der eingangs genannten Art gelöst, wobei die landwirtschaftliche Verteilmaschine zumindest einen Vorratsbehälter für Saatgut, Dünger oder dergleichen umfasst, dem Vorratsbehälter zumindest eine Dosiereinrichtung zugeordnet ist und die Dosiereinrichtung nach zumindest einer der vorstehenden Ausführungsformen ausgeführt ist.

Die landwirtschaftliche Verteilmaschine kann beispielsweise eine Drillmaschine, vorzugsweise eine mechanische Sämaschine, sein. Alternativ kann die landwirtschaftliche Verteilmaschine eine Einzelkornsämaschine sein.

Weitere Einzelheiten der Erfindung sind der Beispielsbeschreibung und den Zeichnungen zu entnehmen. Die Zeichnungen zeigen
Fig.1 eine hinter einem Ackerschlepper angehangene landwirtschaftliche Verteilmaschine in perspektivischer Ansicht,
Fig.2 eine erfindungsgemäße Dosiereinrichtung mit einem Absperrschieber in geschlossener Position in perspektivischer Ansicht,
Fig.3 die Dosiereinrichtung, wobei der Absperrschieber in geöffneter Position ist, in perspektivischer Ansicht,
Fig.4 die Dosiereinrichtung mit einer Verriegelung in Schnittansicht und Detailansicht,
Fig.5 die Dosiereinrichtung, wobei die Verrieglung entriegelt ist, in Schnittansicht und Detailansicht,
Fig.6 die Dosiereinrichtung mit einer Dosierabdeckung in geöffneter Stellung in perspektivischer Ansicht,
Fig.7 die Dosiereinrichtung mit einem Lagergehäuse in Seitenansicht,
Fig.8 die Dosiereinrichtung, wobei das Lagergehäuse in einer entnehmbaren Position ist, in Seitenansicht, und
Fig.9 die Dosiereinrichtung, wobei die Dosierabdeckung in geschlossener Stellung ist, in Seitenansicht.

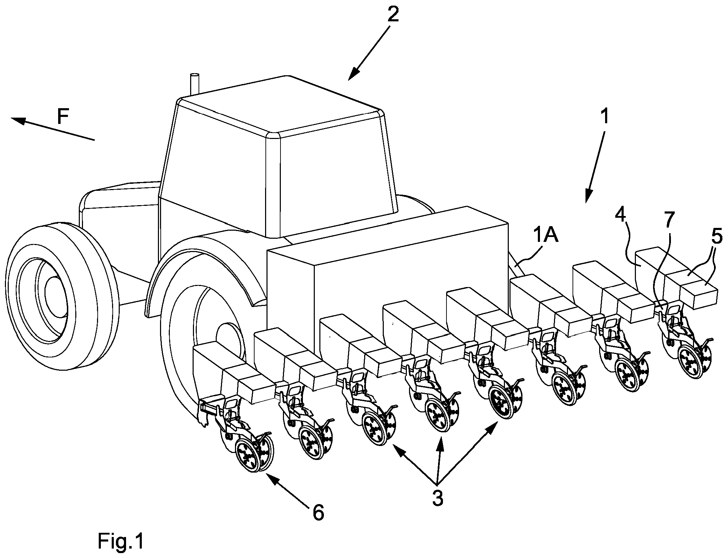

Eine als Einzelkornsämaschine 1 ausgeführte landwirtschaftliche Verteilmaschine ist in Fig.1 gezeigt. Die Einzelkornsämaschine 1 ist hinter einem Ackerschlepper 2 angehangen, so dass die beiden Maschinen sich zusammen im Betrieb über ein zu bearbeitendes Feld in Fahrtrichtung F fortbewegen und körniges Gut, wie beispielsweise Saatgut oder Dünger, ausbringen können. Die Einzelkornsämaschine 1 umfasst an ihrem in Fahrtrichtung F hinteren Ende eine Mehrzahl von quer zur Fahrtrichtung F angeordneten Säaggregaten 3. Die Säaggregate 3 sind am Rahmen 1A der Einzelkornsämaschine 1 befestigt, wobei der Rahmen 1A sich für den Straßentransport auf die zulässige Gesamtbreite einklappen oder teleskopieren lässt.

Die Säaggregate 3 sind mittels jeweils eines Anbauflanschs am Rahmen 1A der Einzelkornsämaschine 1 befestigt. Im oberen Bereich weisen die Säaggregate 3 einen ersten Vorratsbehälter 4, primär für Saatgut, und zwei zweite Vorratsbehälter 5, vorrangig für körniges Gut, auf. Im unteren, zum Boden weisenden, Bereich weisen die Säaggregate 3 Bodenbearbeitungswerkzeuge 6 auf. Die Bodenbearbeitungswerkzeuge 6 dienen dazu eine Säfurche zu öffnen und diese wieder zu schließen, nachdem Saatgut und körniges Gut in diese abgegeben wurden.

Zur Abgabe von Saatgut aus dem ersten Vorratsbehälter 4 umfassen die Säaggregate 3 jeweils eine Vereinzelungseinrichtung 7. Die Vereinzelungseinrichtung 7 ist einerseits mit dem ersten Vorratsbehälter 4 und andererseits mit den Bodenbearbeitungswerkzeugen 6 verbunden und dazu eingerichtet, Saatgut vereinzelt in die Säfurche abzugeben. Zur Förderung körnigen Gutes in einstellbaren Mengen umfassen die Säaggregate 3 jeweils zwei Dosiereinrichtungen 8. Die Dosiereinrichtungen 8 sind jeweils den zweiten Vorratsbehälterern 5 zugeordnet und an einem Auslass derselbigen angeordnet. Das von den Dosiereinrichtungen 8 jeweils geförderte körnige Gut wird ebenfalls zu den Bodenbearbeitungswerkzeugen 6 geleitet, wo es in den Boden eingearbeitet wird.

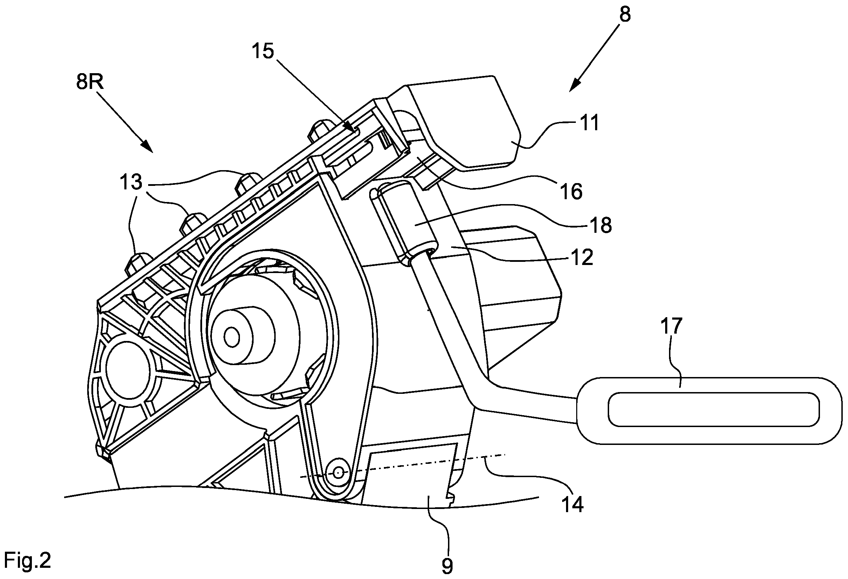

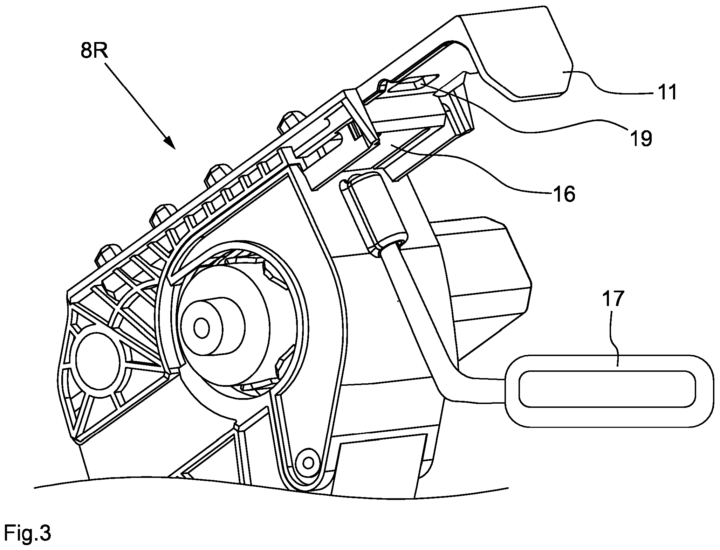

Eine erfindungsgemäße Dosiereinrichtung 8 ist in Fig.2 in perspektivischer Ansicht gezeigt. Die Dosiereinrichtung 8 umfasst im Wesentlichen ein Dosiergehäuse 9, ein in dem Dosiergehäuse 9 angeordnetes und antreibbares Dosierrad 10, eine Dosierabdeckung 12 und einen verschiebbaren, hier in Fig.2 geschlossenen, Absperrschieber 11. Das Dosiergehäuse 9 lässt sich über Befestigungshaken 13 an seiner Rückseite 8R an einem zweiten Vorratsbehälter 5 anordnen. Auf der Rückseite 8R des Dosiergehäuses 9 befindet sich ein hier in Fig.2 verdeckter Einlass für körniges Gut aus dem zweiten Vorratsbehälter 5. Dieser Einlass wird durch den Absperrschieber 11 bedeckt, wenn der Absperrschieber 11 geschlossen ist, so dass kein körniges Gut in das Dosiergehäuse 9 einfließen kann. Der Absperrschieber 11 ist folglich in Fig.2 in seiner geschlossenen Stellung gezeigt. Um den Einfluss körnigen Gutes in das Dosiergehäuse 9 zu ermöglichen, kann der Absperrschieber 11 verschoben, sprich geöffnet, werden, wie in Fig.3 gezeigt, so dass ein Öffnungsquerschnitt des Einlasses in das Dosiergehäuse 9 freigegeben wird.

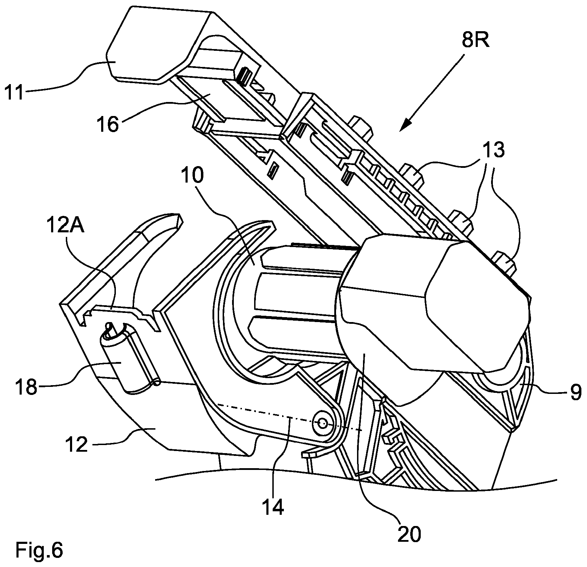

Um einem Benutzer Arbeiten am Inneren des Dosiergehäuses 9 zu erlauben, lässt sich die Dosierabdeckung 12 mittels eines eine Schwenkachse 14 aufweisenden Schwenkgelenks zwischen verschiedenen Stellungen verbringen. In Fig.2 ist die Dosierabdeckung 12 in einer ersten das Dosierrad 10 schützenden Stellung gezeigt, sprich das Dosiergehäuse 9 ist geschlossen. Der Dosierabdeckung 12 ist in dieser ersten geschlossenen Stellung eine Verriegelung 15 zugeordnet, welche verhindert, dass die Dosierabdeckung 12 ungewünscht in eine zweite das Dosierrad freigebende Stellung, wie in Fig.6 gezeigt, verbringbar ist.

Die Verriegelung 15 umfasst ein wegdrückbares Verriegelungselement 16. Das Verriegelungselement 16 ist dazu eingerichtet, eine lösbare, formschlüssige Verbindung nach dem Prinzip einer Schnappverbindung mit der Dosierabdeckung 12 herzustellen und diese so in ihrer ersten das Dosierrad 10 schützenden Stellung zu sichern. Um diese formschlüssige Verbindung zu lösen und somit das Dosiergehäuse 9 zu öffnen, ist das Verriegelungselement 16 in Richtung der Rückseite 8R wegzudrücken. Hierzu umfasst die Dosiereinrichtung 8 als Werkzeug 17 mit korrespondierender an der Dosierabdeckung 12 angeordneter Einführhilfe 18 ausgeführte Mittel zum Aufbringen einer Wegdrückkraft. Die Einführhilfe 18 bildet eine Linearführung für das Werkzeug 17 in Betätigungsrichtung des Verriegelungselementes 16 und erleichtert so das Aufbringen der Wegdrückkraft. Zusätzlich ist die Einführhilfe 18 derart nah vor dem Verriegelungselement 16 angeordnet, dass das Verriegelungselement 16 nicht von Hand betätigbar ist.

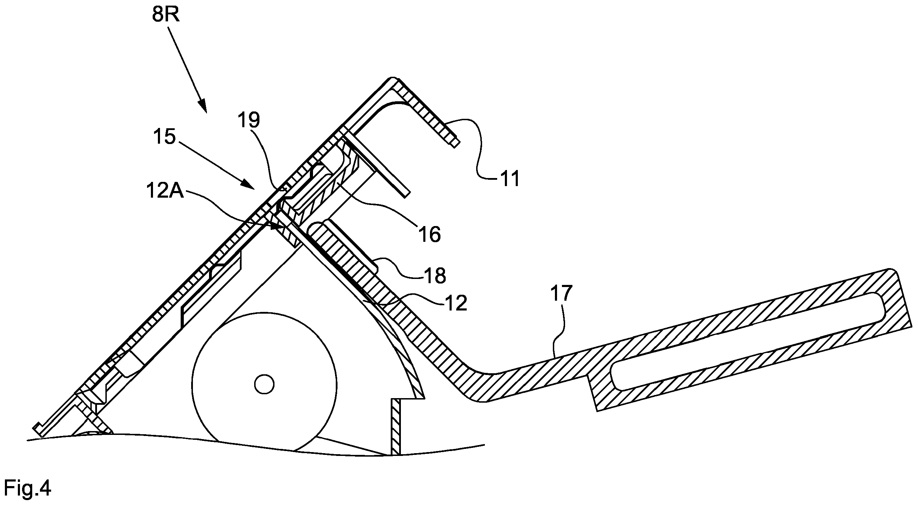

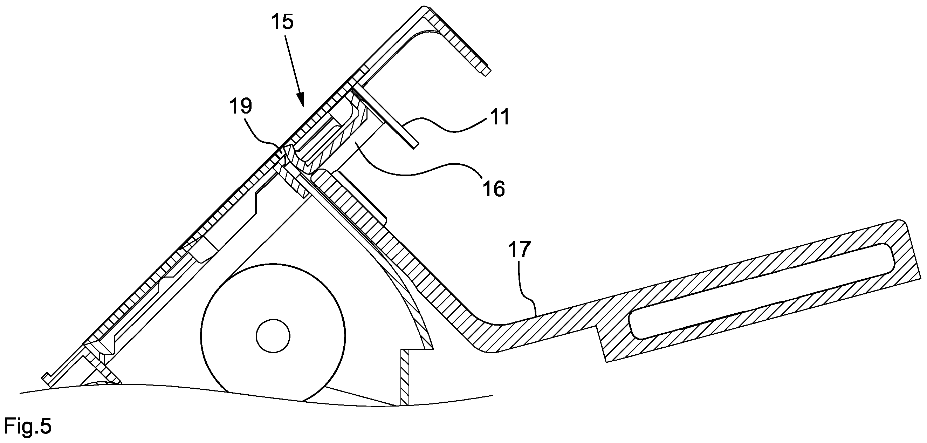

In Fig.4 ist die Verriegelung 15 in Detailansicht und Schnittansicht gezeigt. Das Verriegelungselement 16 befindet sich in Anlage mit einer Nase 12A der Dosierabdeckung 12 und bildet so die formschlüssige Verbindung aus. Die Nase 12A ist in der dargestellten Position unter dem Verriegelungselement 16 eingerastet. In Richtung der Rückseite 8R hinter dem Verriegelungselement 16 ist der Absperrschieber 11, hier in Fig.4 in geschlossener Position gezeigt, angeordnet. Der Absperrschieber 11 umfasst eine als Aussparung 19 ausgeführte Aufnahme für das Verriegelungselement 16. Wird nun mittels des Werkzeuges 17 die Eindrückkraft auf das Verriegelungselement 16 zum Lösen der Verriegelung 15 aufgebracht, so taucht das Verriegelungselement 16 unter elastischer Verformung in die Aussparung 19 des Absperrschiebers 11 ein, wie Fig. 5 zeigt. Die formschlüssige Verbindung zwischen dem Verriegelungselement 16 und der Nase 12A der Dosierabdeckung 12 ist somit gelöst und die Dosierabdeckung 12 lässt sich um die Schwenkachse 14 in ihre zweite das Dosierrad 10 freigebende Stellung schwenken, wie in Fig.6 gezeigt. Damit das Verriegelungselement 16 in die Aussparung 19 am Absperrschieber 11 weggedrückt werden kann, ist es notwendig, dass der Absperrschieber 11 sich in seiner geschlossenen Position befindet.

In Fig.3 ist der Absperrschieber 11 in seiner geöffneten Position gezeigt. Die Aussparung 19 befindet sich in dieser Position nicht in Richtung der Rückseite 8R hinter dem Verriegelungselement 16. Brächte der Benutzer bei dieser geöffneten Position des Absperrschiebers 11 die Wegdrückkraft mittels des Werkzeuges 17 auf das Verriegelungselement 16 auf, lässt sich das Verriegelungselement 16 nicht unter elastischer Verformung wegdrücken und somit die Verriegelung 15 nicht lösen. Der Absperrschieber 11 ist folglich mittels der Aussparung 19 dazu eingerichtet, das Wegdrücken des Verriegelungselementes 16 in seiner geöffneten Position zu blockieren bzw. in seiner geschlossenen Position, wie unter anderem in Fig.4 und 5 gezeigt, zu ermöglichen. Die Anordnung der Aussparung 19 am Absperrschieber 11 bedingt, dass der Absperrschieber 11 geschlossen sein muss, damit die Verriegelung 15 lösbar ist. Ansonsten kann das Verriegelungselement 16 nicht in der Aussparung 19 aufgenommen werden und stößt vor den Absperrschieber 11 ohne dabei die Nase 12A freizugeben.

Für den Benutzer ist es folglich zum Öffnen der Dosiereinrichtung 8 zuerst notwendig den Absperrschieber 11 zu schließen. Anschließend kann mit Hilfe des Werkzeuges 17 die Eindrückkraft auf das Verriegelungselement 16 aufgebracht werden. Hierzu ist das Werkzeug 17 in die Einführhilfe 18 einzuführen und in Richtung des Verriegelungselementes 16 zu schieben. Dadurch wird das Verriegelungselement 16 eingedrückt und die formschlüssige Verbindung zwischen Verriegelungselement 16 und der Nase 12A an der Dosierabdeckung 12 gelöst, so dass die Dosierabdeckung 12 schließlich verbracht werden kann. Um die Dosierabdeckung 12 zu verbringen, wird die Nase 12A an der Dosierabdeckung 12 aus der formschlüssigen Verbindung herausgeschwenkt. Die Dosierabdeckung 12 schwenkt hierbei um die Schwenkachse 14 herab in ihre zweite das Dosierrad 10 freigebende Stellung.

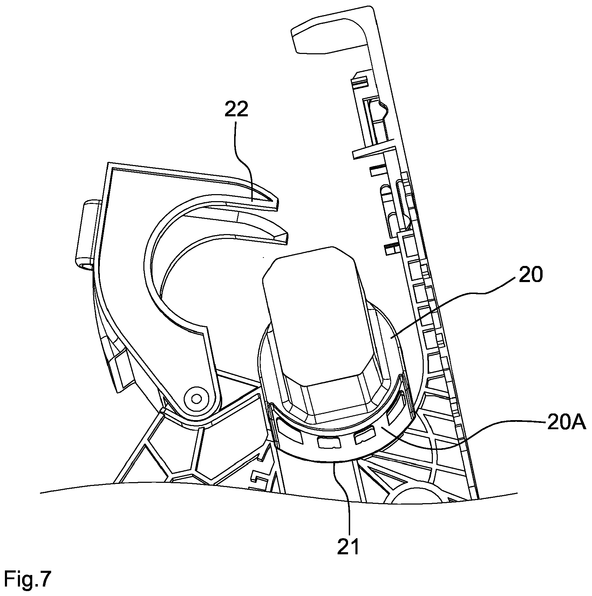

In Fig. 6 ist die Dosiereinrichtung 8 mit geöffneter Dosierabdeckung 12 in perspektivischer Ansicht gezeigt. Im Innern des Dosiergehäuses 9 ist das Dosierrad 10 zu sehen. Zur drehbaren Lagerung des Dosierrades 10 umfasst die Dosiereinrichtung 8 ein entnehmbares Lagergehäuse 20 mit nahezu rundem Querschnitt. Das Lagergehäuse 20 umfasst geeignete Mittel zur Lagerung des Dosierrades 10 und ist in eine halbkreisförmige Aufnahme 21 am Dosiergehäuse 9 einsetzbar, wie in Fig. 7 in Seitenansicht gezeigt ist. Um das Lagergehäuse 20 lösbar an dem Dosiergehäuse 9 festzulegen, umfasst das Lagergehäuse 20 an seinem Umfang eine nutartige Ausnehmung 20A. Diese nutartige Ausnehmung 20A bildet einen Schlitz und ist so dazu eingerichtet, eine viertelkreisförmige, fingerförmige Ausformung 21A an der Aufnahme 21 zu hintergreifen.

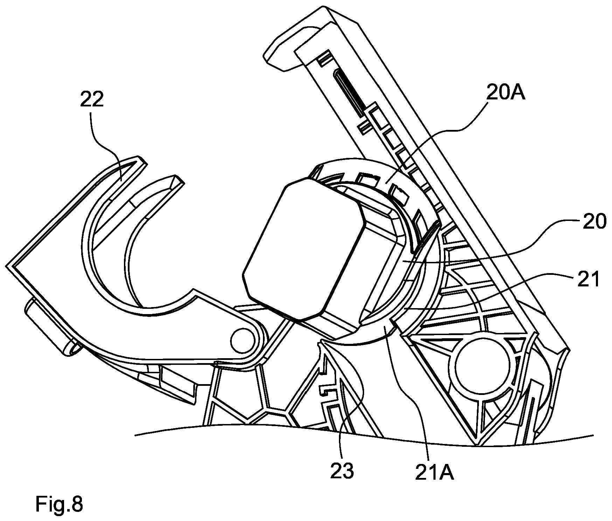

Die annährend achtelkreisförmige Ausformung 21A an der Aufnahme 21 ist in Fig.8 zu sehen, in der das Lagergehäuse 20 in einer aus dem Dosiergehäuse 9 entnehmbaren Entsicherungsstellung gezeigt ist. Das Lagergehäuse 20 ist hier entnehmbar, weil die Ausnehmung 20A sich nicht im Eingriff mit der Ausformung 21A befindet. Die Ausformung 21A bildet einen Hinterschnitt, so dass wenn die Ausformung 21A von der Ausnehmung 20A hintergriffen wird, das Lagergehäuse 20 sich in einer in axialer und zumindest teilweise in horizontaler Richtung festgelegten Sicherungsstellung befindet. Diese Sicherungsstellung des Lagergehäuses 20 ist in Fig.7 gezeigt, wo im Gegensatz zu der in Fig.8 gezeigten Entsicherungsstellung, die Ausformung 21A von der Ausnehmung 20A hintergriffen wird.

Um das Lagergehäuse 20 in die Aufnahme 21 einzusetzen und somit am Dosiergehäuse 9 festzulegen, sprich das Lagergehäuse 20 aus der Entsicherungsstellung in die Sicherungsstellung zu verbringen, ist das Lagergehäuse 20 in die Aufnahme 21 einzuführen. Das heißt, das Lagergehäuse 20 wird so in der Aufnahme 21 positioniert, dass die Ausnehmung 20A die Ausformung 21A hintergreifen kann. Beispielhaft ist eine solche Positionierung des Lagergehäuses in Fig.8 gezeigt. Drehen des Lagergehäuses 20 bis zu einem ersten Anschlag 23 des Lagergehäuses führt dann dazu, dass die Ausnehmung 20A über die Ausformung 21A gleitet und diese in sich aufnimmt und somit hintergreift, wie in Fig.7 gezeigt. In dieser am Dosiergehäuse 9 festgelegten Stellung des Lagergehäuses 20 weist die Ausnehmung 20A zumindest annährend von der Mittelachse des Lagergehäuses 20 radial in Richtung Boden. Um das Lagergehäuse 20 wieder zu lösen ist das Lagergehäuse 20 in umgekehrter Richtung zu drehen. Diese Drehung in umgekehrter Richtung ist in der ersten Stellung der Dosierabdeckung 12 blockiert.

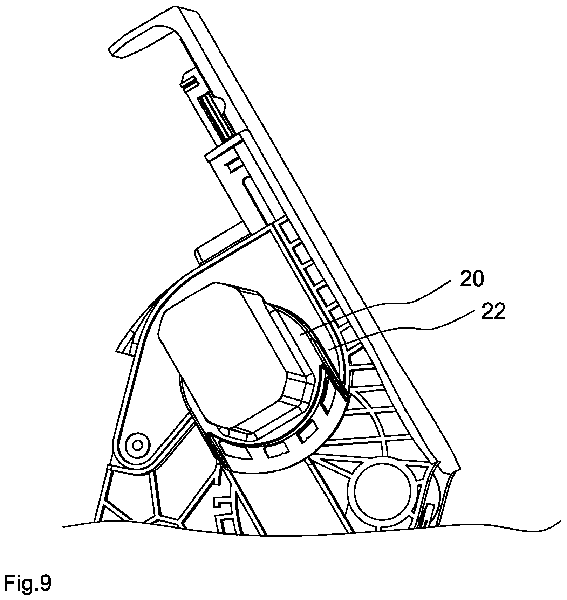

Die Dosierabdeckung 12 weist einen stegförmigen, ansatzförmig ausgebildeten Absatz 22 auf, welcher in der ersten Stellung der Dosierabdeckung 12 eine Anlage für das Lagergehäuse 20 bildet, wie in Fig.9 gezeigt ist. So ist sichergestellt, dass sich das Lagergehäuse 20 nicht unbemerkt und ungewollt losdreht. Außerdem bildet der Absatz 22 somit eine Drehmomentstütze für das Lagergehäuse 20. Im Betrieb von dem Lagergehäuse 20 aufgenommene Drehmomente werden über den Absatz 22 an die Dosierabdeckung 12 weitergeleitet und von dort aus über das Dosiergehäuse 9 an umliegende Strukturen abgeleitet. Ferner bildet der Absatz 22 in der ersten Stellung der Dosierabdeckung 12 einen dem ersten Anschlag 23 gegenüberliegenden zweiten Anschlag für das Lagergehäuse 20, so dass das Lagergehäuse 20 zwischen dem ersten Anschlag 23 und dem Absatz 22 drehfest am Dosiergehäuse festgelegt ist. Ist die Dosierabdeckung 12 geöffnet, wie in Fig.8 gezeigt, bildet der Absatz 22 keine Anlage für das Lagergehäuse 20, so dass eine Drehung des Lagergehäuses 20 entgegen der Richtung in der der erste Anschlag 23 liegt ermöglicht ist.

### Bezugszeichenliste

- 1: Einzelkornsämaschine
- 1A: Rahmen
- 2: Ackerschlepper
- F: Fahrtrichtung
- 3: Säaggregat
- 4: erster Vorratsbehälter
- 5: zweiter Vorratsbehälter
- 6: Bodenbearbeitungswerkzeuge
- 7: Vereinzelungseinrichtung
- 8: Dosiereinrichtung
- 8R: Rückseite
- 9: Dosiergehäuse
- 10: Dosierrad
- 11: Absperrschieber
- 12: Dosierabdeckung
- 12A: Nase
- 13: Befestigungshaken
- 14: Schwenkachse
- 15: Verriegelung
- 16: Verriegelungselement
- 17: Werkzeug
- 18: Einführhilfe
- 19: Aussparung
- 20: Lagergehäuse
- 20A: Ausnehmung
- 21: Aufnahme
- 21A: Ausformung
- 22: Absatz
- 23: erster Anschlag

## Patentansprüche

1. Dosiereinrichtung (8) für körniges Gut, wie beispielsweise Saatgut oder Dünger, zur Förderung des körnigen Gutes in einstellbaren Mengen, wobei die Dosiereinrichtung (8) ein Dosiergehäuse (9), ein in dem Dosiergehäuse (9) angeordnetes und antreibbares Dosierrad (10) und einen verschiebbaren Absperrschieber (11) umfasst, wobei das Dosiergehäuse (9) eine in verschiedene Stellungen verbringbare Dosierabdeckung (12) umfasst, die Dosierabdeckung (12) eine erste das Dosierrad (10) schützenden Stellung und eine zweite das Dosierrad (10) freigebende Stellung umfasst, der Dosierabdeckung (12) eine die Dosierabdeckung (12) in der ersten Stellung sichernde Verriegelung (15) zugeordnet ist, und wobei die Verriegelung (15) ein wegdrückbares Verriegelungselement (16) umfasst, **dadurch gekennzeichnet, dass** die Dosierabdeckung (12) an der dem Absperrschieber (11) zugewandten Seite eine Nase (12A) umfasst und das Verriegelungselement (16) dazu eingerichtet ist, eine lösbare, formschlüssige Verbindung mit der Nase (12A) der Dosierabdeckung (12) in der ersten Stellung herzustellen, dass der Absperrschieber (11) in Wegdrückrichtung des Verriegelungselementes (16) hinter der Verriegelung (15) angeordnet ist und eine Aufnahme (19) für das Verriegelungselement (16) aufweist, und dass der Absperrschieber (11) mittels der Aufnahme (19) dazu eingerichtet ist, das Wegdrücken des Verriegelungselementes (16) zu ermöglichen und/oder zu blockieren.

2. Dosiereinrichtung (8) nach Anspruch 1, **dadurch gekennzeichnet, dass** die Dosierabdeckung (12) mittels eines eine Schwenkachse (14) aufweisenden Schwenkgelenkes an dem Dosiergehäuse (9) angeordnet ist, dass die Dosierabdeckung (12) mittels des Schwengelenks zwischen der ersten und zweiten Stellung verbringbar ist.

3. Dosiereinrichtung (8) nach zumindest einem der vorstehenden Ansprüche, **dadurch gekennzeichnet, dass** die Dosiereinrichtung (8) Mittel zum Aufbringen einer Wegdrückkraft auf das Verriegelungselement (16) umfasst.

4. Dosiereinrichtung (8) nach nach Anspruch 3, **dadurch gekennzeichnet, dass** die Mittel zum Aufbringen der Wegdrückkraft ein Werkzeug (17) und eine zu dem Werkzeug (17) korrespondierende Einführhilfe (18) an der Dosierabdeckung (12) umfassen, dass die Einführhilfe (18) derart an der Dosierabdeckung (12) angeordnet ist, dass das unmittelbar manuelle Aufbringen der Wegdrückkraft verhindert und das Aufbringen mittels des Werkzeuges (17) erleichtert ist.

5. Verfahren zum Öffnen einer Dosiereinrichtung (8) mit einem Dosiergehäuse (9) und einem verschiebbaren Absperrschieber (11), die vorzugsweise nach zumindest einem der Ansprüche 1 bis 4 ausgebildet ist, umfassend die Schritte:
a. Schließen eines Absperrschiebers (11),
b. Aufbringen einer Wegdrückkraft auf ein Verriegelungselement (16),
c. Eindrücken des Verriegelungselementes (16) zum Lösen einer formschlüssigen Verbindung zwischen Verriegelungselement (16) und einer Nase (12A) einer Dosierabdeckung (12), und
d. Verbringen der Dosierabdeckung (12).

6. Verfahren nach Anspruch 5, ferner umfassend die folgenden Schritte zum Aufbringen der Wegdrückkraft auf das Verriegelungselement (16):
a. Einführen eines Werkzeuges (17) in eine Einführhilfe (18) an der Dosierabdeckung (12),
b. Schieben des Werkzeuges (17) in Richtung des Verriegelungselementes (16).

7. Verfahren nach Anspruch 5, ferner umfassend die Schritte zum Verbringen der Dosierabdeckung (12):
a. Herausschwenken der Nase (12A) an der Dosierabdeckung (12) aus der formschlüssigen Verbindung mit dem Verriegelungselement (16) um eine Schwenkachse (14),
b. Herabschwenken der Dosierabdeckung (12) um die Schwenkachse (14) in eine ein Dosierrad (10) der Dosiereinrichtung (8) freigebende Stellung.

8. Landwirtschaftliche Verteilmaschine (1) zum Ausbringen von Saatgut, Dünger oder dergleichen, **dadurch gekennzeichnet, dass** die landwirtschaftliche Verteilmaschine (1) zumindest einen Vorratsbehälter (5) für Saatgut, Dünger oder dergleichen umfasst, dass dem Vorratsbehälter (5) zumindest eine Dosiereinrichtung (8) zugeordnet ist, und dass die Dosiereinrichtung (8) nach zumindest einem der Ansprüche 1 bis 4 ausgeführt ist.

## Claims

1. Metering unit (8) for granular material, for example seed or fertilizer, for conveying the granular material in adjustable quantities, wherein the metering unit (8) comprises a metering unit housing (9), a metering wheel (10) arranged and drivable in the metering unit housing (9), and a displaceable shut-off valve (11), wherein the metering unit housing (9) comprises a metering unit cover (12) that can be moved into different positions, the metering unit cover (12) comprises a first position protecting the metering wheel (10) and a second position releasing the metering wheel (10), a locking means (15) securing the metering unit cover (12) in the first position is associated with the metering unit cover (12), and wherein the locking means (15) comprises a locking element (16) that can be pushed away, **characterized in that** the metering unit cover (12) on the side facing the shut-off valve (11) has a lug (12A) and the locking element (16) is configured to provide a releasable, interlocking connection to the lug (12A) of the metering unit cover (12) in the first position, **in that** the shut-off valve (11) in the push-away direction of the locking element (16) is arranged behind the locking means (15) and comprises a receptacle (19) for the locking element (16) and **in that** the shut-off valve (11) is configured by means of the receptacle (19) to facilitate and/or to block the pushing away of the locking element (16).

2. Metering unit (8) according to claim 1, **characterized in that** the metering unit cover (12) is arranged on the metering unit housing (9) by means of a pivot joint comprising a pivot axis (14), and **in that** the metering unit cover (12) can be moved between the first and second position by means of the pivot joint.

3. Metering unit (8) according to at least one of the preceding claims, **characterized in that** the metering unit (8) comprises means for applying a push-away force to the locking element (16).

4. Metering unit (8) according to claim 3, **characterized in that** the means for applying the push-away force comprises a tool (17) and an insertion aid (18) which corresponds to the tool (17) on the metering unit cover (12), and **in that** the insertion aid (18) is arranged in such a way on the metering unit cover (12) that the directly manual application of the push-away force is prevented and the application is facilitated by means of the tool (17).

5. Method for opening a metering unit (8) having a metering unit housing (9) and a displaceable shut-off valve (11), which metering unit is preferably designed according to at least one of claims 1 to 4, comprising the steps of:
a. closing a shut-off valve (11),
b. applying a push-away force to a locking element (16),
c. pushing in the locking element (16) to release an interlocking connection between locking element (16) and a lug (12A) of a metering unit cover (12), and
d. moving the metering unit cover (12).

6. Method according to claim 5, further comprising the following steps for applying the push-away force to the locking element (16):
a. inserting a tool (17) into an insertion aid (18) on the metering unit cover (12),
b. pushing the tool (17) in the direction of the locking element (16).

7. Method according to claim 5, further comprising the following steps for moving the metering unit cover (12):
a. pivoting the lug (12A) on the metering unit cover (12) out of the interlocking connection with the locking element (16) about a pivot axis (14),
b. pivoting the metering unit cover (12) downward about the pivot axis (14) into a position that releases a metering wheel (10) of the metering unit (8).

8. Agricultural spreader (1) for dispensing seed, fertilizer or the like, **characterized in that** the agricultural spreader (1) comprises at least one storage container (5) for seed, fertilizer or the like, **in that** (5) at least one metering unit (8) is associated with the storage container, and **in that** the metering unit (8) is embodied according to at least one of claims 1 to 4.

## Revendications

1. Dispositif de dosage (8) pour matériau granulaire, comme par exemple des semences ou de l'engrais, destiné au transport du matériau granulaire dans des quantités réglables, le dispositif de dosage (8) comprenant un boîtier de dosage (9), une roue de dosage (10) disposée dans le boîtier de dosage (9) et pouvant être entraînée et une vanne d'arrêt (11) coulissante, le boîtier de dosage (9) comprenant un couvercle de dosage (12) pouvant être déplacé dans différentes positions, le couvercle de dosage (12) comprenant une première position protégeant la roue de dosage (10) et une seconde position libérant la roue de dosage (10), un dispositif de verrouillage (15), qui bloque le couvercle de dosage (12) dans la première position, étant associé au couvercle de dosage (12), et le dispositif de verrouillage (15) comprenant un élément de verrouillage (16) qui peut être écarté, **caractérisé en ce que** le couvercle de dosage (12) comprend, sur le côté orienté vers la vanne d'arrêt (11), un nez (12A) et l'élément de verrouillage (16) est conçu pour établir une liaison par complémentarité de forme avec le nez (12A) du couvercle de dosage (12) dans la première position, **en ce que** la vanne d'arrêt (11) est disposée, dans la direction d'écartement de l'élément de verrouillage (16), derrière le dispositif de verrouillage (15) et présente un logement (19) pour l'élément de verrouillage (16), **et en ce que** la vanne d'arrêt (11) est conçue pour, au moyen du logement (19), permettre et/ou bloquer l'écartement de l'élément de verrouillage (16).

2. Dispositif de dosage (8) selon la revendication 1, **caractérisé en ce que** le couvercle de dosage (12) est disposé sur le boîtier de dosage (9) au moyen d'une articulation de pivotement présentant un axe de pivotement (14), **en ce que** le couvercle de dosage (12) peut être déplacé entre la première et la seconde position au moyen de l'articulation de pivotement.

3. Dispositif de dosage (8) selon au moins une quelconque des revendications précédentes, **caractérisé en ce que** le dispositif de dosage (8) comprend des moyens servant à appliquer une force d'écartement sur l'élément de verrouillage (16).

4. Dispositif de dosage (8) selon la revendication 3, **caractérisé en ce que** les moyens servant à appliquer la force d'écartement comprennent un outil (17) et une aide à l'introduction (18) correspondant à l'outil (17) sur le couvercle de dosage (12), **en ce que** l'aide à l'introduction (18) est disposée de telle manière sur le couvercle de dosage (12), **que** l'application directement manuelle de la force d'écartement est empêchée et l'application au moyen de l'outil (17) est facilitée.

5. Procédé d'ouverture d'un dispositif de dosage (8) doté d'un boîtier de dosage (9) et d'une vanne d'arrêt (11) coulissante, qui est réalisé de préférence selon au moins une des revendications 1 à 4, comprenant les étapes :
a. fermeture d'une vanne d'arrêt (11),
b. application d'une force d'écartement sur un élément de verrouillage (16),
c. enfoncement de l'élément de verrouillage (16) pour libérer une liaison par complémentarité de forme entre l'élément de verrouillage (16) et un nez (12A) d'un couvercle de dosage (12), et
d. déplacement du couvercle de dosage (12).

6. Procédé selon la revendication 5, comprenant en outre les étapes suivantes pour appliquer la force d'écartement sur l'élément de verrouillage (16) :
a. introduction d'un outil (17) dans une aide à l'introduction (18) sur le couvercle de dosage (12),
b. poussée de l'outil (17) en direction de l'élément de verrouillage (16).

7. Procédé selon la revendication 5, comprenant en outre les étapes pour déplacer le couvercle de dosage (12) :
a. pivotement du nez (12A) sur le couvercle de dosage (12) hors de la liaison par complémentarité de forme avec l'élément de verrouillage (16) autour d'un axe de pivotement (14),
b. pivotement vers le bas du couvercle de dosage (12) autour de l'axe de pivotement (14) dans une position libérant une roue de dosage (10) du dispositif de dosage (8).

8. Machine agricole de distribution (1) destinée à répandre des semences, de l'engrais ou similaire, **caractérisée en ce que** la machine agricole de distribution (1) comprend au moins un réservoir de stockage (5) pour des semences, de l'engrais ou similaire, **en ce qu'**au moins un dispositif de dosage (8) est associé au réservoir de stockage (5), **et en ce que** le dispositif de dosage (8) est réalisé selon au moins une des revendications 1 à 4.
